# EUROPEAN PATENT APPLICATION

(11) **EP 4 790 284 A1**
(43) Date of publication of application: **12.08.2026**
(21) Application number: 24861327.5
(22) Date of filing: 30.12.2024
(51) Int. Cl.: F16K 11/078, F16K 31/60, F16K 37/00, G05D 23/13, G01K 13/02, E03C 1/04

(54) **ELECTRONIC MIXER CARTRIDGE AND ELECTRONIC OPERATING HANDLE**

(30) Priority: 19.12.2024 ES 202431081
(71) Applicant: Citec Innova, S.L., 07660 Santanyi (ES)
(72) Inventor: ARTES GARCIA, Jose, 07660 Santanyi (ES); RECIO FERNÁNDEZ, Diego, 07660 Santanyi (ES)
(74) Representative: Isern Patentes y Marcas S.L.
(86) International application number: PCT/ES2024/070812
(87) International publication number: WO 2026/132623

(57) **Abstract**

The present invention relates to an electronic mixer cartridge (1) for mixer taps, provided to be attached to an operation handle having interface means and an electronic control board (26). The mixer cartridge is provided with temperature detection means consisting of a temperature probe (8) configured for direct water temperature reading, being attached to an electronic board (9) arranged in a housing made in the base (3), having a base (3) linked to the ceramic discs, which is located inside the bottom of the main housing, the base (3) of which has a hole through which the temperature probe (8) protrudes, such that the temperature probe is in direct contact with the flow of mixed water. **In** addition, sealing means are provided which are configured to prevent the flow of mixed water from coming in contact with the electronic board (9).

## Description

### OBJECT OF THE INVENTION

The invention relates to an electronic mixer cartridge provided with water temperature detection means, an electronic operation handle for a mixer tap provided with a user interface, and an operating assembly consisting of the electronic mixer cartridge and the operation handle.

### BACKGROUND OF THE INVENTION

A wide variety of cartridges for mixer taps are currently available on the market, said cartridges being developed for the inlet of hot or cold water and an outlet for mixed water, or hot or cold water, depending on the user's needs.

Also known in the prior art are accessories which enable the temperature of the mixed water to be determined and display some type of warning or information about the fact that the temperature of the mixed water corresponds to the scalding temperature, which may include a temperature indicator operatively attached to a temperature measurement circuit.

An exemplary embodiment of a mixed water temperature detection system in a mixer tap is disclosed in document US 4,682,626 which shows a single-lever mixer fitting having a temperature indicating means electrically attached to a valve assembly via a sensor plate. However, the sensor plate is an external supplement to the replaceable cartridge, so the cartridge itself does not contain the means required to perform temperature detection. Thus, in order to carry out all functionalities, the replaceable cartridge is necessarily linked to the sensor plate, which is a drawback due to the possibility of water leakage when the sensor plate is attached to the cartridge.

Document ES 2871805 is also known, which discloses a mixer cartridge wherein the temperature is read indirectly via a probe housed inside a base where it is not in contact with the water flow, the common portions of which form part of the preamble to claim 1.

However, it has been observed that performing an indirect reading, by heat transfer from the contact wall of a base with the water to the probe integrated in the base, provides poor reading accuracy, since it must be taken into account that the reading it detects is the temperature of the base piece and it is slow. To solve this problem, a correction parameter can be applied in the software linked to the temperature probe, but it implies having a highly accurate measurement of the heat dissipation factor in materials, so its reliability is not as desired.

Furthermore, the applicant is currently unaware of any invention that has all of the features described in this specification.

### DESCRIPTION OF THE INVENTION

The present invention has been developed with the aim of providing an electronic mixer cartridge that is configured as a novelty within the field of application and solves the previously mentioned drawbacks, further contributing other additional advantages that will become apparent from the description below.

Therefore, an object of the present invention is to provide an electronic mixer cartridge for mixer taps, which is of the type comprising:
A main housing having a generally cylindrical shape;
A base located inside the bottom of the main housing having a first through hole provided for the passage of a flow of cold water, a second through hole provided for the passage of a flow of hot water and a third through hole provided for the passage of a flow of mixed water;
A pair of ceramic discs located above the base, one lower ceramic disc being fixedly attached to the base;
A movable cover arranged above the ceramic discs, said movable cover capable of being moved by the movement caused by an actuating block protruding from the top of the main housing and configured to be attached to an operation handle;
Temperature detection means for detecting the temperature value in the third hole; and A connector that is attached to the electronic board via a flexible cable for power supply and data communication, the connector being provided to be attached to a connector of an operation handle.

In particular, the invention is characterised in that the temperature detection means consist of a probe configured for direct water temperature reading, being attached to an electronic board arranged in a housing made in the base, the base having a hole through which the temperature probe protrudes, such that the temperature probe is in direct contact with the flow of mixed water. In addition, sealing means are provided which are configured to prevent the flow of mixed water from coming in contact with the electronic board.

According to an embodiment of the invention, the sealing means may consist of a resin coating that partially or completely surrounds the electronic board and partially surrounds the portion of the temperature probe that is in contact with the through hole in the base.

Preferably, the cartridge comprises a groove that extends longitudinally on the outer face of the side wall of the main housing that is sized, configured to house the flexible cable.

In order for the cable to not be externally exposed to dirt or shocks, a releasable protective cap that is snap-fitted into the groove is provided.

Additionally, the electronic board has a communication module (e.g., wireless) provided for data transmission with an external system, so that information related to the flow rate of water circulating through the mixer cartridge (such as volume or supply pressure), possible leak presence, the water quality according to a pre-set standard, etc., can be transmitted.

Another object of the invention is to provide an electronic operation handle for a mixer tap, configured to be operatively attached to a mixer cartridge as described above, which comprises a body of any suitable material, is provided with a housing containing user interface means and an electronic control board configured to be in data communication with the electronic board of the mixer cartridge, the operation handle having connection means that can be linked to the connector present in the mixer cartridge.

Preferably, the connecting means consist of a pin connector that extends outwards from the electronic control board.

According to the invention, the interface means comprise a display screen allowing, for example, the current temperature value of a water flow to be shown.

Preferably, the operation handle comprises means for detecting its position that consist of an accelerometer, so that the microprocessor can detect whether the operation handle is in the open or closed position in order to activate or deactivate the interface means present in the operation handle itself.

Advantageously, the operation handle includes a power supply associated with the electronic control board. It should be noted that in the event of a power failure, the supply of hot, cold or mixed water will not be affected in any manner.

In one embodiment, the power supply consists of a removable battery.

In an alternative embodiment, the power supply consists of a rechargeable battery connected to a USB connector port.

These features improve the reliability of the temperature value detected by the probe, so that in the event of a sudden change in temperature due to rapid operation of the handle by the user, the value obtained from the probe is virtually instantaneous and true. This is in contrast with what can happen when using an indirect temperature reading probe, where it has been observed that, due to heat transfer with the base material, the reading recorded can be inaccurate and requires more time to obtain the temperature data.

It should be noted that the mixer cartridge has standard dimensions, so it is not necessary to modify the dimensions of the housing in the tap fitting in order to insert this mixer cartridge, which considerably simplifies its assembly in new or existing taps compared to other cartridges or systems known in the prior art.

Another object of the invention is to provide an operating assembly for a mixer tap, comprising a mixer cartridge as described above, and an operation handle which is operatively attached and in data communication with the mixer cartridge.

Thus, the mixer cartridge described represents an innovative structure with structural and constituent features heretofore unknown for its intended purpose, reasons which, taken together with its usefulness, provide it with sufficient grounds for obtaining the requested exclusivity privilege.

Other features and advantages of the electronic mixer cartridge and the operation handle object of the present invention will become apparent from the description of a preferred, but not exclusive, embodiment which is illustrated by way of non-limiting example in the attached drawings, in which:

### BRIEF DESCRIPTION OF THE DRAWINGS

Figure 1 is a perspective view of an electronic mixer cartridge according to the present invention;
Figure 2 is a partial cross-sectional perspective view of the electronic mixer cartridge shown in figure 1;
Figure 3 is a perspective view of the assembly formed by the temperature detection means present in the mixer cartridge according to the invention;
Figure 4 is a detailed perspective view of the temperature probe;
Figure 5 is a detailed cross-sectional perspective view of the temperature probe;
Figure 6 is a perspective view of the base of the mixer cartridge having the temperature detection means incorporated therein;
Figure 7 is a perspective view from the bottom of the cartridge base shown in figure 6;
Figure 8 is a perspective view of an operation handle of a tap attached to the mixer cartridge according to the invention;
Figure 9 is a perspective view of the mixer cartridge attached to the components inside the operation handle;
Figure 10 is a partial cross-sectional perspective view of the mixer cartridge attached to the components inside the operation handle;
Figure 11 is a partial perspective view of the components inside the operation handle where the support element has been omitted for clarity purposes;
Figure 12 is a partial perspective view from the bottom of the components inside the operation handle where the support element has been omitted for clarity purposes; and Figure 13 is a perspective view of the components inside the operation handle.

### DESCRIPTION OF A PREFERRED EMBODIMENT

In view of the aforementioned figures, and in accordance with the adopted numbering, a preferred exemplary embodiment of the invention is disclosed, which comprises the parts and elements indicated and described in detail below.

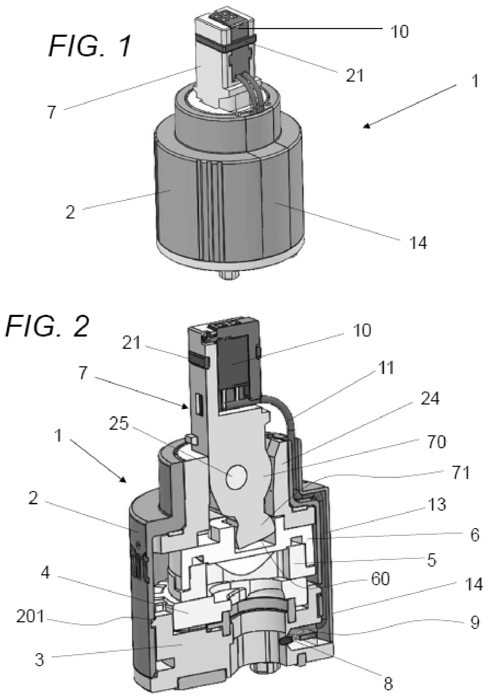

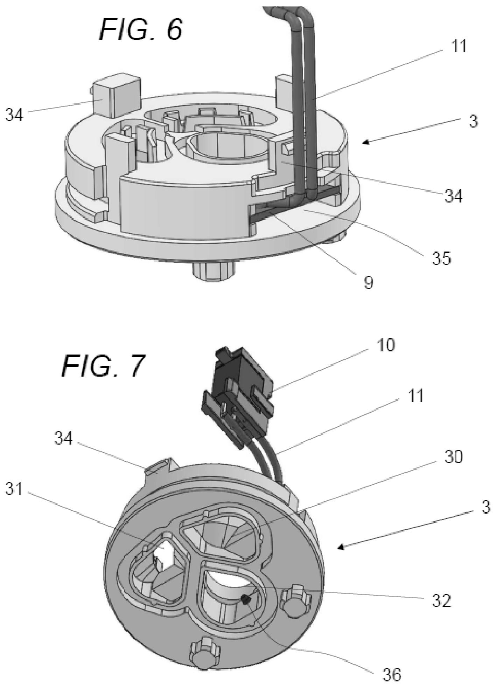

As figures 1 to 7 show, an electronic mixer cartridge for mixer taps can be seen, generally indicated by the reference (1), said cartridge comprising a main housing (2) having a generally cylindrical shape that includes a disc-shaped base (3) on its bottom. As figures 6 and 7 show in more detail, the base (3) has a first through hole (30) provided for the passage of a flow of cold water, a second through hole (31) provided for the passage of a flow of hot water and a third through hole (32) provided for the passage of a flow of mixed water. Vertically extending bosses (34) are provided on the top of the base (3), which are configured to be attached to an indentation (201) made on the inner face of the side wall of the main housing (2), so that the base (3) remains fixed to the main housing (2).

A pair of ceramic discs (4) and (5) are arranged above the base, one lower ceramic disc (4) being fixedly attached to the base (3) and one upper ceramic disc (5) being movable. The description of ceramic discs will not be further described as they are well known in the art and ceramic discs currently available on the market are used.

A movable cover (6) is provided above the ceramic discs (4) and (5), said movable cover capable of being moved by the movement caused by an actuating block (7) protruding from the top of the main housing (2) and configured to be attached to an operation handle.

The actuating block comprises a cam (70) having a lower end (71) configured to be attached to a cavity (60) in the movable cover (6). Thus, when the cam (70) is actuated, the movable cover (6) for the water supply is moved.

As can be seen in greater detail in Figure 2, the cam (70) is pivotably attached to a sleeve member (24) by means of a pin (25) which passes through said cam (70) via a hole, said pin (25) being fixed in holes provided in the sleeve member (24).

The mixer cartridge (1) also includes temperature detection means to detect, by direct contact, the temperature value in the third hole (32) where the mixed water is led.

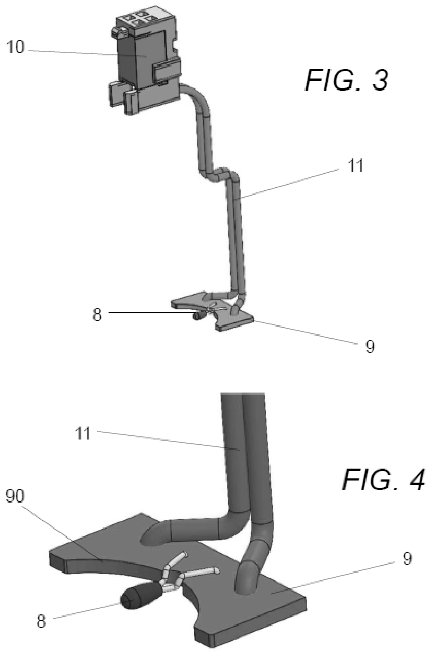

Returning to the aforementioned temperature detection means, they consist of a temperature probe (8), of the negative temperature coefficient (NTC) thermistor type, configured for direct water temperature reading, being attached to an electronic board (9) arranged in a housing defined by a slot (35) made in the side wall of the base (3), which carries out the processing of the signal received by the temperature probe. As figures 3 and 4 show, the electronic board (9) has a flat configuration with a curved inner portion (90) that is sized to fit a curved contour of the inner portion of the base (3).

The base (3) has a hole (36) in the wall of the third through hole (32) through which the temperature probe (8) protrudes, such that the temperature probe (8) protrudes perpendicular to the longitudinal axis of the cartridge (1), so that the temperature probe (8) is in direct contact with the flow of mixed water as it exits through the third through hole (32).

On the top of the actuating block (7) is a recess in which a connector (10) is fixedly housed and connected to the electronic board (9) via a flexible cable (11) for power supply and data communication, the connector (10) being provided to be attached to a connector located on an operation handle, as will be explained below.

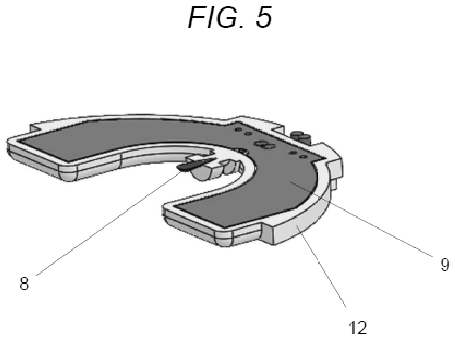

In order to prevent the mixed flow from coming in contact with the electronic board (9), sealing means are provided that consist of a resin coating (12) that partially or completely surrounds the electronic board (9) and partially surrounds the portion of the temperature probe that is in contact with the through hole in the base, the tip of the probe being coating-free as shown in figure 5. This coating (12) is applied once the electronic board (9) is inserted into the base, so that the gap between the temperature probe (8) and the through hole (36) is completely sealed by the coating (12) to ensure that the electronic board (9) is watertight, preventing the same from being damaged by contact with water.

The outer face of the side wall of the main housing (2) comprises a groove (13) that extends longitudinally and is sized to house the flexible cable (11). A releasable protective cap (14) is attached to said groove (13) via snap-fitting.

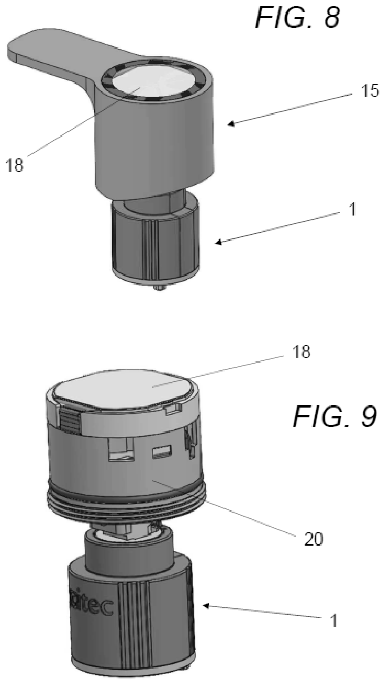

Figures 8 to 12 partially show a mixer tap comprising a tap body (not shown) housing therein a mixer cartridge (1) as described above, and an operation handle (15) mechanically linked to the mixer cartridge (1), which is provided with a housing containing user interface means and comprising a user-friendly display screen (18) (e.g., of the LCD type) so that the temperature value can be viewed.

Furthermore, inside the operation handle (15) is a microprocessor (16) that is associated with the display screen (18) and configured to be in data communication with the electronic board (9) provided in the mixer cartridge (1), the operation handle (15) having connection means that can be linked to the connector (10) present in the mixer cartridge (1). This microprocessor (16) is provided with embedded software capable of detecting the handle operation time as well as the ON and OFF position.

The software is also capable of generating a warning to the user about excessive water temperature, an energy efficiency warning (depending on the variables of operating time and detected temperature), as well as preventive warnings that can be indicated on the display screen (18).

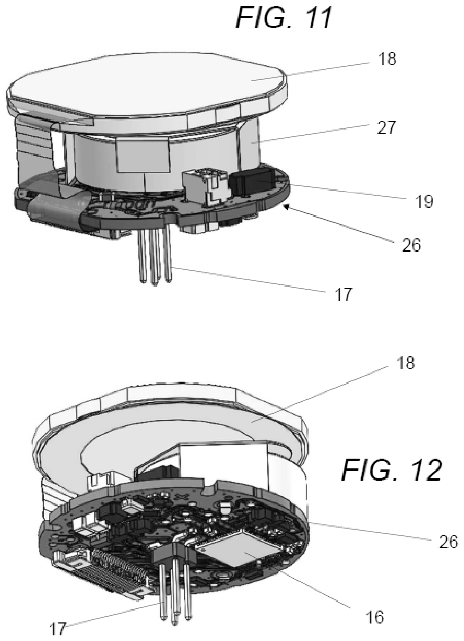

As can be seen in figures 11 and 12, the connecting means consist of a pin connector (17) that extends outwards from the electronic control board (26) provided in the operation handle (15).

The operation handle (15) also comprises detection means configured to detect its position by means of an accelerometer (19) mounted on the electronic control board (26).

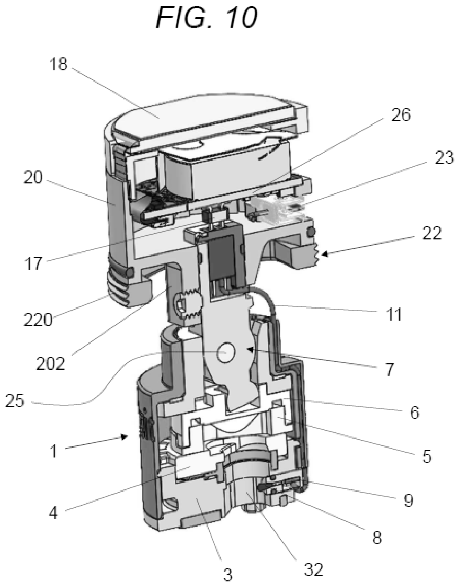

The microprocessor (16) and the display screen (18) are mounted on a support element (20) consisting of a substantially cylindrical internally hollow body, which has a tubular extension (202) towards the cartridge in which the cam (70) is partially inserted. As can be seen in figure 10, sealing means are provided that consist of a gasket (21) which is intended to be located between the inner face of the operation handle body (15) and the outer face of the support element (20).

In the present embodiment shown, the support element is fixed to the operation handle body (15) by means of a connecting element (22) having an external threaded portion (220).

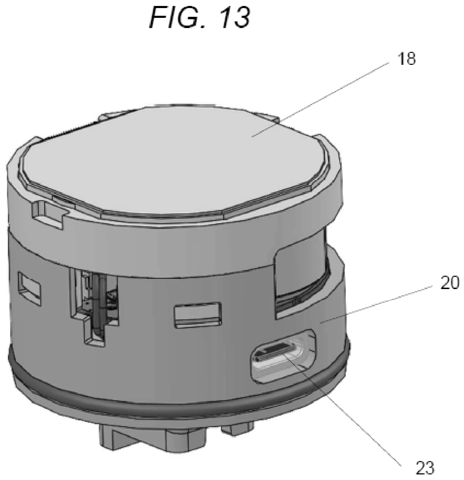

The operation handle (15) includes a power supply associated with the electronic board that consists of a rechargeable battery connected to a USB connector port (23) (see figure 13), but alternatively the power supply may consist of a removable battery.

The mixer cartridge (1) of the present invention, intended to be incorporated in a tap as described above, can be part of a smart management system, such as a home automation system, in which the elements that are part of the same exchange information to manage different data of interest, such as, for example, the regulation of the mixed water output in a tap.

The details, shapes, dimensions and other secondary elements, used to manufacture the electronic mixer cartridge of the invention, may be suitably replaced with others that do not depart from the scope defined by the claims included below.

## Claims

1. An electronic mixer cartridge (1) for mixer taps, comprising:
a main housing (2) having a generally cylindrical shape;
a base (3) located inside the bottom of the main housing having a first through hole provided for the passage of a flow of cold water, a second through hole provided for the passage of a flow of hot water and a third through hole provided for the passage of a flow of mixed water;
a pair of ceramic discs located above the base, one lower ceramic disc being fixedly attached to the base (3);
a movable cover (6) arranged above the ceramic discs, said movable cover capable of being moved by the movement caused by an actuating block protruding from the top of the main housing (2) and configured to be attached to an operation handle;
Temperature detection means for detecting the temperature value in the third hole;
a connector that is attached to the electronic board via a flexible cable for power supply and data communication, the connector being provided to be attached to a connector of an operation handle,
**characterised in that** the temperature detection means consist of a temperature probe (8) configured for direct water temperature reading, being attached to an electronic board (9) arranged in a housing made in the base (3), the base (3) having a hole through which the temperature probe (8) protrudes, such that the temperature probe is in direct contact with the flow of mixed water, and
wherein sealing means are provided which are configured to prevent the flow of mixed water from coming in contact with the electronic board (9).

2. The mixer cartridge (1) according to claim 1, **characterised in that** the sealing means consist of a resin coating that partially or completely surrounds the electronic board (9) and partially surrounds the portion of the temperature probe (8) that is in contact with the through hole in the base (3).

3. The mixer cartridge (1) according to any of the preceding claims, **characterised in that** it comprises a groove that extends longitudinally on the outer face of the side wall of the main housing that is sized, configured to house the flexible cable.

4. The mixer cartridge (1) according to claim 3, **characterised in that** it includes a releasable protective cap that is snap-fitted into the groove.

5. The mixer cartridge (1) according to any of the preceding claims, **characterised in that** the electronic board (9) has a wireless communication module provided for data transmission with an external system.

6. The mixer cartridge (1) according to any of the preceding claims, **characterised in that** the temperature probe (8) is of the negative temperature coefficient (NTC) thermistor type.

7. An electronic operation handle (15) for a mixer tap, configured to be operatively attached to a mixer cartridge according to any of claims 1 to 6, comprising a body, **characterised in that** the body is provided with a housing containing user interface means and an electronic control board (26) configured to be in data communication with the electronic board (9) of the mixer cartridge (1), the operation handle having connection means that can be linked to the connector present in the mixer cartridge (1).

8. The operation handle (15) according to claim 7, **characterised in that** the connecting means consist of a pin connector that extends outwards from the electronic control board (26).

9. The operation handle (15) according to claim 7, **characterised in that** the interface means comprise a display screen (18) configured to display the information received by the microprocessor (16).

10. The operation handle (15) according to claim 7, **characterised in that** the operation handle (15) comprises means for detecting its position that consist of an accelerometer mounted on the electronic control board (26).

11. The operation handle (15) according to any of claims 7 to 10, **characterised in that** the inside of the operation handle (15) includes an electronic control board (26) on which the microprocessor (16) and the interface means are mounted, and sealing means arranged between the inner face of the operation handle (15) body and the outer face of the support element.

12. The operation handle (15) according to any of claims 7 to 11, **characterised in that** it includes a power supply associated with the microprocessor (16).

13. The operation handle (15) according to claim 12, **characterised in that** the power supply consists of a removable battery.

14. The operation handle (15) according to claim 12, **characterised in that** the power supply consists of a rechargeable battery connected to a USB connector port (23).

15. An operating assembly for a mixer tap, **characterised in that** it comprises a mixer cartridge (1) according to any of claims 1 to 6, and an operation handle (15) according to any of claims 7 to 14, which is operatively attached and in data communication with the mixer cartridge (1).
